(19) Europäisches Patentamt
European Patent Office
Office européen des brevets

(11) Publication number : 0 207 856 B2

(12) NEW EUROPEAN PATENT SPECIFICATION

(45) Date of publication of the new patent specification : 23.06.93 Bulletin 93/25

(51) Int. Cl.[5] : C08G 63/16, C08G 63/78, C08G 63/88

(21) Application number : 86401418.8

(22) Date of filing : 27.06.86

# (54) Process for the preparation of ultra high molecular weight polyesters.

The file contains technical information submitted after the application was filed and not included in this specification

(30) Priority : 27.06.85 JP 141247/85

(43) Date of publication of application : 07.01.87 Bulletin 87/02

(45) Publication of the grant of the patent : 04.04.90 Bulletin 90/14

(45) Mention of the opposition decision : 23.06.93 Bulletin 93/25

(84) Designated Contracting States : FR GB

(56) References cited :
EP-A- 0 181 498
EP-A- 0 182 352
CA-A- 1 035 894
DE-A- 1 645 605
DE-A- 1 920 369
FR-A- 1 105 134
FR-A- 2 180 115
GB-A- 0 720 120
GB-A- 1 015 393
JP-A-59 279 547
US-A- 3 489 720
US-A- 3 523 923
US-A- 3 716 523
Li-Chen Hsu: "Synthesis of Ultrahigh Molecular Weight Poly(ethylene terephthalate)", J. Macromol. Sci-Phys., B1(4), 801-813, Dez.1967

(73) Proprietor : Toyo Boseki Kabushiki Kaisha
No.2-8, Dojimahama 2-chome Kita-ku
Osaka-shi Osaka 530 (JP)

(72) Inventor : Tate, Susumu
6-12, Shouyoudai 1-chome Imazu-cho
Takashima-gun Shiga-ken (JP)
Inventor : Hashimoto, Hiroshi
7-5, Shimosakamoto 1-chome
Otsu-shi Shiga-ken (JP)
Inventor : Naruzawa, Haruhiko
Biwako-Misora-Dainidanchi No 2 Misora-cho
Otsu-shi Shiga-ken (JP)
Inventor : Watanabe, Youichi
1-2, Katate 2-chome
Otsu-shi Shiga-ken (JP)
Inventor : Chiba, Akira
9-29, Sumiyoshihigashimachi 3-chome
Higashinada-ku
Kobe-shi Hyogo-ken (JP)

(74) Representative : Descourtieux, Philippe et al
Cabinet Beau de Loménie 158, rue de l'Université
F-75340 Paris Cédex 07 (FR)

EP 0 207 856 B2

## Description

### FIELD OF THE INVENTION

The present invention relates to a novel process for the preparation of ultra-high-molecular-weight polyesters. More particularly, it relates to the process of preparation of ultra-high-molecular-weight polyesters having intrinsic viscosity of not less than 1.5 and good solubility, wherein aromatic dicarboxylic acid or alkyl ester thereof and glycols are subjected to esterification of ester exchange reaction according to a conventional method followed by polycondensation in solid phase in a specific heating medium.

### BACKGROUND OF THE INVENTION

A polyester is generally produced by direct esterification of an aromatic dicarboxylic acid and glycol, or by ester exchange reaction or an alkyl ester of aromatic dicarboxylic acid and glycol to give a glycol ester and/or an oligomer followed by heating them with stirring under high vacuum to effect polycondensation.

The FR 1 105 134 (VEREINIGTE GLANZSTOFF-FABRIKEN A.G.) discloses a process for producing polyesters having a relative viscosity of 1.7 corresponding to an intrinsic viscosity of about 0.6. The liquid paraffin used in this reference does not swell polyester and, therefore, only polymer having such a low viscosity can be obtained.

The US 3 523 923 (JAMES G. SMITH et al.) discloses polyester prepared from (1) at least one compound selected from the group consisting of dibasic carboxylic acids and their lower alkyl esters (2) at least one member selected from the group consisting of the cis and trans-isomers of 1,4-cyclohexane-dimethanol and (3) an ether-glycol.

U.S. Patent No. 2 597 643 discloses that polymerization of polyester can be carried out in a solvent. In such reaction, the polymerization is, however, carried out in a solution which can completely dissolve a resulting polyester, and hence, the resulting polyester has a very low intrinsic viscosity of 0.4-0.7.

There has been widely and industrially used a process wherein polycondensation is carried out by heating and stirring under a high vacuum. This process, however, requires certain vacuum apparatus to keep high vacuum and high power for stirring of material having high viscosity.

Further, since materials for industry use, such as a tire cord and the like, require higher physical properties, there is used a polyester having a high molecular weight. However, it is difficult to stir such a polyester having a higher molecular weight, and hence, a polymer obtained by melt polycondensation is generally subjected to further solid phase polymerization under vacuum or an inert gas flow for a long term of time. In the latter process, however, a polyester having intrinsic viscosity of, at most, 1.0 to 1.5 is usually prepared. In addition, it is difficult to completely dissolve the resulting polyester in a solvent.

On the other hand, it has been reported that a polymer is pulverized in fine powder and subjected to solid phase polymerization to obtain a polyester having a molecular weight of about 120,000 (Cryogenic Properties of polymers, 249, Dekker). However, in this case, it has been also reported that the resulting polyester is partially insoluble in a solvent used for measuring viscosity, and it is assumed that the molecular weight of the polyester is apparently increased due to a crosslinking reaction.

### OBJECTS AND SUMMARY OF THE INVENTION

In order to obtain a polyester having a high molecular weight as well as good solubility, the present inventors have intensively studied. As the result, it has been found that ultra-high-molecular-weight polyesters can be obtained by polycondensation in solid phase, in a specific heating medium.

The main object of the present invention is to provide ultra-high-molecular-weight polyesters having high intrinsic viscosity and good solubility.

This and other objects and advantages of the present invention will be apparent to skilled persons in the art from the following description.

According to the present invention, there is provided a process for production of ultra-high-molecular-weight polyester which comprises steps of:

subjecting aromatic dicarboxylic acid or alkyl ester thereof, and glycol to ester exchange reaction or esterification, and

subjecting the resulting mixture to polycondensation, in a solid phase, characterized in that said polycondensation is performed in one or more of heating mediums selected from the group consisting of compounds having the following general formula (I) or (II) to give a polyester having an intrinsic viscosity of not less than 0.9:

$$A^1 - A^2 \text{-----} A^k \qquad (I)$$

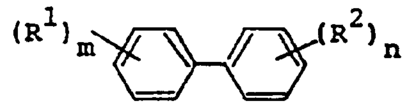

(II)

(wherein $A^1$ and $A^k$ are phenyl or $C_{5-20}$ cycloalkyl; $A^2$ to $A^{k-1}$ are, respectively, phenylene or $C_{5-20}$ cycloalkylene; $R^1$ and $R^2$ are $C_{1-20}$ alkyl; k is integer of 2 - 5; and m and n are integer of 0 - 5, provided that $n+m \geqq 1$).

DETAILED DESCRIPTION OF THE INVENTION

Aromatic dicarboxylic acid or alkyl ester thereof used in the present invention includes dicarboxylic acid having two carboxylic groups directly connected to a benzene or naphthalene ring such as terephthalic acid, isophthalic acid, 2,6-naphthalenedicarboxylic acid and sodium 6-sulfoisophthalate, p-β-oxyethoxybenzoic acid, 4,4'-dicarboxyldiphenyl, 4,4'-dicarboxylbenzophenone, bis(4-carboxylphenyl)-ethane, or alkyl esters thereof such as methyl, ethyl and propyl ester.

The alkylene glycol used in the present invention includes alkylene glycols having 2 to 6 carbon atoms such as ethylene glycol, propylene glycol, butane diol and neopentyl glycol, diethylene glycol, cyclohexane dimethanol, ethylene oxide adduct of bisphenol A.

The intrinsic viscosity of the polyester obtained by the process of the present invention is not less than 1.5, preferably 1.5 to 10.0, more preferably 1.5 to 8.0. The intrinsic viscosity in the present invention is determined according to the following method.

The intrinsic viscosity was measured with a mixture of p-chlorophenol (PCP)/tetrachloroethane (TCE) (3/1) at 30°C, and the resulting value was converted to the viscosity in phenol/tetrachloroethane (6/4) using the following formula :

$$[\eta]\ 60/40\ \text{phenol/TCE} = 0.8352\ [\eta]\ 3/1\ \text{CTP/TCE} + 0.005$$

The term "ultra-high-molecular-weight" used herein means a molecular weight of the polyester of not less than about 70,000. Usually, the polyester of the present invention having the above intrinsic viscosity has a molecular weight of about 70,000 to 1,000,000.

The insoluble polymer content of the polyester obtained by the process of the present invention is not more than 10% by weight, usually, 10 to 0 % by weight. As described above, the term "insoluble polymer content" means the value measured by dissolving 6 g of said polyester in 100 ml of the mixed solvent of trifluoracetic acid/dichloroethane (1/1) at 25°C with stirring at 150 to 200 r.p.m. for 6 hours, filtering an insoluble material with a glass filter having opening size of 20 to 30 μ under reduced pressure, washing the insoluble material with chloroform, drying at 130°C for 24 hours in vacuo, weighing the resulting insoluble material and calculating the weight % of the insoluble material based on 6 g of the polyester.

The aromatic dicarboxylic acid or alkyl ester thereof and alkylene glycol are subjected to esterification or ester exchange reaction according to a conventional method to give an oligomer. That is, there is carried out the esterification of aromatic dicarboxylic acid with alkylene glycol, or ester exchange reaction of alkyl ester of aromatic dicarboxylic acid with alkylene glycol. Then, the oligomer or the oligomer condensed in the earlier stage is heated and stirred in a solid phase with a heating medium in an amount of 1 to 100 times, preferably 2 to 50 times as much as the amount of the oligomer in the presence of a known polycondensation catalyst at about 200 - 300°C, preferably at 200 - 280°C for about 1 - 20 hours under ambient, reduced or certain pressure to give the desired ultra-high-molecular-weight polyester of the present invention. By the way, by-product glycol, which is transferred into the heating medium, can be removed with an inert gas by blowing the intert gas (e.g. nitrogen, carbone dioxide, helium, argon and the like) into the reaction system, or by replacing the said heating medium by a fresh one. The oligomer or polymer in the heating medium is subjected to polycondensation reaction in a melting state or a solid state due to heating temperature.

Alternatively, the polyester can be produced by the following present invention process.

A polyester having intrinsic viscosity of 0.5 to 0.7 is prepared by carrying out the esterification or ester exchange reaction of the above aromatic dicarboxylic acid or alkyl ester thereof and alkylene glycol according to a conventional method to give oligomer, and then either subjecting the oligomer to a conventional melt polycondensation under a high vacuum, or to polycondensation in a solid phase in the above heating medium. The resulting polyester having intrinsic viscosity of 0.5 to 0.7 is formed into a chip and charged into a solid polymerization tank. Then, in the polymerization tank, the resulting polyester chip and the heating medium are heated with stirring under ambient, reduced or certain pressure, at about 150-250°C, preferably at 220-240°C about 1-20 hours to give the desired ultra-high-molecular-weight polyester.

The heating medium used in these processes is a heat-stable organic compound which can be used as a

liquid with a range of the reaction temperature, and there is examplified aromatic hydrocarbons and alicyclic hydrocarbons. Suitable examples of such heating medium used in the present invention are heating mediums which can swell polyesters and cannot dissolved polyesters, or one or more than two kinds of the compounds having the following general formula (I) or (II):

$$A^1 - A^2 ----- A^k \qquad (I)$$

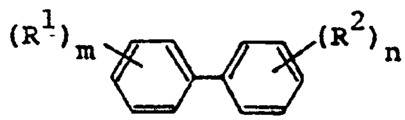 (II)

(wherein $A^1$ and $A^k$ are phenyl or $C_{5-20}$ cycloalkyl; $A^2$ to $A^{k-1}$ are, respectively, phenylene or $C_{5-20}$ cycloalkylene; $R^1$ and $R^2$ are $C_{1-20}$ alkyl; k is integer of 2 - 5; and m and n are integer of 0 - 5, provided that $n+m \geqq 1$). Examples of the compounds of the formulas (I) and (II) include triethyl biphenyl, diethylbiphenyl, dimethylbiphenyl, trimethylbiphenyl, tetraethyl biphenyl, tripropyl biphenyl, cyclohexyl benzene, hydrogenated triphenyl, hydrogenated tetraphenyl and the like. The heating medium can be purified prior to use by a known method, such as distillation.

As the polycondensation catalyst, there can be used a known catalyst in the production of a polyester such as antimony, titanium, cobalt, manganese, germanium, tungsten and tin compound. A particularly preferred catalyst used in the present invention includes tungsten or tin compound, which is compatible to polyester, such as tungstic acid or a salt thereof, stannous acetate, stannous bromide, stannic bromide, stannous chloride, stannic chloride and the like.

It is assumed that the heating medium has the following properties. That is, the polycondensation reaction is equilibrated with a by-product glycol, and hence, a high-molecular-weight polymer cannot be obtained unless by the by-product glycol is expelled from the polymerization system. It is believed that the heating medium partly impregnates into the polymer and swells it to remove the by-product glycol from the polymer, resulting in facilitating the polycondensation reaction.

It is unknown why the polyester obtained by the process of the present invention can be readily dissolved in a solvent, while it has a very high viscosity. The following Examples, and Comparative Examples further illustrate the present invention.

Example 1

Into a 500 ml reactor, equipped with a stirrer, an inert gas inlet, a waste gas outlet, and a bottom discharge opening, where charged an oligomer directly obtained from esterification of terephthalic acid and ethylene glycol (containing 0.05 mol % (as tungsten) of tungstic acid as a polymerization catalyst based on an acid component and having an intrinsic viscosity of 0.35) (5 g), and hydrogenated triphenyl (250 ml) as a heating medium. Then, the mixture was heated with stirring at 250°C under 2.0 L/min. of nitrogen flow. A waste gas, a part of the heating medium and a by-product ethylene glycol were discharged via a discharge opening, while a fresh heating medium was added to keep the constant liquid level. At 4 and 6 hours after beginning of the reaction, entire heating medium was changed to a fresh medium, respectively. At 8 hours after beginning of the reaction, the obtained polyethylene terephthalate was removed, washed thoroughly with acetone and dried. The resulting polyester was white and had the intrinsic viscosity of 2.3. The insoluble polymer content was 0% by weight.

Then the build-up polymer on the inside wall of the reactor was dissolved in 200 ml of m-cresol, which was reprecipitated with methanol, washed and dried to give polyester having the intrinsic viscosity of 2.3.

Example 2

The same procedure of Example 1 was repeated except that triethyl biphenyl was used as a heating medium. After 8 hours of the reaction, the intrinsic viscosity of the polymer was 2.0. The insoluble polymer content was 0 % by weight.

Example 3

Into the same reactor as in Example 1 were charged polyester chips, which were directly obtained from esterificaton of terephthalic acid and ethylene glycol followed by the conventional melt polymerization (containing 0.05 mol % of antimony as a polymerization catalyst and hving an intrinsic viscosity of 0.60) (50g), and

hydrogenated triphenyl (250 ml) as a heating medium. The mixture was heated with stirring under a nitrogen flow at 2.0 L/min while the temperature was gradually raised up and kept at 230°C.

On raising temperature, the polyester chips began to crystallize and were whitened at about 150°C. And a waste gas, a part of the heating medium and a by-product glycol were removed via the discharged opening, while a fresh heating medium was added to keep the constant liquid level.

After 8 hours, polyethylene terephthalate was removed, washed thoroughly with acetone and dried. The resulting polyester was white and had the intrinsic viscosity of 1.66. The insoluble polymer content was 0% by weight.

Comparative Example 1

There was carried out crystallization treatment at 150°C using the same polyester chips in Example 3. The above polyester chips (50 g) were charged in a glass tube under dry nitrogen flow at 2.0 L/min at 230°C.

After 8 hours, the polyester was removed and the intrinsic viscosity thereof measured in the same manner as described in Example 1 was 0.90. The resulting polyester was colored in pale yellow.

Example 4

In the same manner as described in Example 3, except that polyester chips containing 0.05 mol % of tungsten was used instead of that containing antimony, a polyester having an intrinsic viscosity of 1.92 was obtained after 20 hours. The insoluble polymer content was 0% by weight.

Example 5

Into a 300 ml separable reactor, equipped with a stirrer having a turbine impeller, a thermometer, a solvent and inert gas inlet and a gas outlet, were charged the same oligomer described in Example 1 containing tungsten (5 g), and hydrogenated triphenyl (200 ml), and the mixture was reacted with vigorous stirring at 240°C. During the reaction, heated nitrogen gas was supplied at 2.0 L/min and a fresh solvent was added to keep the constant liquid level. After 8 hours, the mixture was cooled and the polymer was removed, washed thorougly with acetone and dried. The resulting polyester had the intrinsic viscosity of 3.03. The insoluble polymer content was 0 % by weight.

Example 6

In the same manner as described in Example 5, except that an oligomer containing 0.05 mol % (as tin) of stannous acetate based on the acid component and having an intrinsic viscosity of 0.34 (5 g) was used, a polyester having an intrinsic viscosity of 3.02 was obtained. The insoluble polymer content was 0% by weight.

Example 7

The same manner as described in Example 5 was repeated except that a reactor was charged with the same oligomer described in Example 6 (50 g) and a heating medium, hydrogenated triphenyl (250 ml), and the mixture was gradually heated to 237°C and maintained at this temperature for 12 hours to carry out polycondensation. The resulting polyester has the intrinsic viscosity of 3.03. The insoluble polymer content was 0% by weight.

Example 8

In the same manner as described in Example 7, except that the same oligomer described in Example 1 (50 g) was used, a polyester having an intrinsic viscosity of 2.56 was obtained. The insoluble polymer content was 0 % by weight.

Example 9

In the same manner as described in Example 7 except that triethyl biphenyl was used as a heating medium, a polyester having an intrinsic viscosity of 2.79 was obtained. The insoluble polymer content was 0% by weight.

Comparative Example 2

In the same manner as described in Example 3, polyester chips obtained by the conventional melt polymerization (containing 0.05 mol % of antimony as a polymerization catalyst and having an intrinsic viscosity of 0.615) were crushed into a particle size of about 1.4 to 2.4 mm, and heated with stirring at a temperature of 215°C under the reduced pressure (0.1 torr). After 170 hours, there was obtained a polyester having an intrinsic viscosity of only 1.59. The insoluble polymer content was as much as 11.5 % by weight.

## Claims

1. A process for production of ultra-high-molecular-weight polyester which comprises steps of: subjecting aromatic dicarboxylic acid or alkyl ester thereof, and glycol to ester exchange reaction or esterification, and subjecting the resulting mixture to polycondensation in a solid phase, characterized in that said polycondensation is performed in one or more of heating mediums selected from the group consisting of compounds having the following general formula (I) or (II) to give a polyester having an intrinsic viscosity of not less than 0.9:

$$A^1 - A^2 \text{-----} A^k \qquad (I)$$

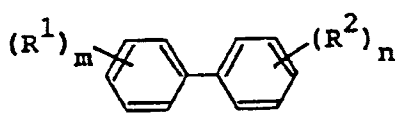 (II)

(wherein $A^1$ and $A^k$ are phenyl or $C_{5-20}$ cycloalkyl; $A^2$ to $A^{k-1}$ are, respectively, phenylene or $C_{5-20}$ cycloalkylene; $R^1$ and $R^2$ are $C_{1-20}$ alkyl; k is integer of 2 - 5; and m and n are integer of 0 - 5, provided that n+m $\geqq$ 1).

2. A process according to claim 1, wherein the polycondensation reaction is carried out with a blowing of an inert gas.

3. A process according to claim 1, wherein the polycondensation reaction is carried out with adding of a fresh heating medium while discharging of the medium and by-product.

4. A process according to claim 1, wherein the polycondensation reaction is carried out in the presence of tungsten compounds and/or tin compounds in the heating medium.

## Patentansprüche

1. Verfahren zur Herstellung eines Polyesters mit ultrahohem Molekulargewicht mit folgenden Stufen:
   - Verestern order Umestern einer aromatischen Dicarbonsäure oder ihres Alkylesters und eines Glycols und
   - Polykondensation des entstandenen Gemisches in einer festen Phase, dadurch gekennzeichnet daß die Polykondensation in mindestens einem Erhitzungsmedium, ausgewählt unter Verbindungen der folgenden Formeln (I) oder (II), zu einem Polyester mit einer Grenzviskositätszahl von mindestens 0.9:

$$A^1 - A^2 \text{-----} A^k \qquad (I),$$

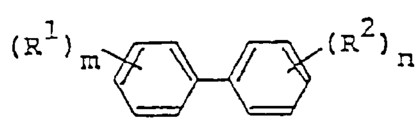 (II),

in denen bedeuten:
$A^1$ und $A^k$ Phenyl oder $C_{5-20}$-Cycloalkyl,
$A^2$ bis $A^{k-1}$ jeweils Phenylen oder $C_{5-20}$-Cycloalkylen,

$R^1$ und $R^2$ je $C_{1-20}$-Alkyl,
k eine ganze Zahl von 2 bis 5
und
m und n je ganze Zahlen von 0 bis 5, vorausgesetzt $n+m \geqq 1$,
durchgeführt wird.

2. Verfahren nach Anspruch 1, in dem die Polykondensation unter Einblasen eines Inertgases durchgeführt wird.

3. Verfahren nach Anspruch 1, in dem die Polykondensation unter Zugabe eines frischen Erhitzungsmediums und Ablassen des Mediums und des Nebenprodukts durchgeführt wird.

4. Verfahren nach Anspruch 1, in dem die Polykendensation in Gegenwart von Wolframverbindungen und/oder Zinnverbindungen im Erhitzungsmedium durchgeführt wird.

## Revendications

1. Procédé de préparation d'un polyester de poids moléculaire extrêmement élevé, qui comprend les étapes consistant à :
soumettre un acide dicarboxylique aromatique ou un alkylester de celui-ci et un glycol à une réaction d'échange d'ester ou à une réaction d'estérification, et à
soumettre le mélange résultant à une polycondensation en phase solide, caractérisé en ce que la polycondensation est effectuée dans un ou plusieurs milieux de chauffage choisis dans le groupe formé par les composés de formule générale suivante (I) et (II) pour donner un polyester ayant une viscosité intrinsèque d'au moins 0.9:

$$A^1 - A^2 ----- A^k \quad (I)$$

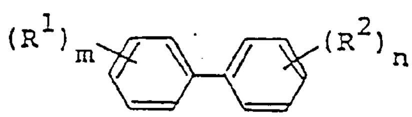

(II)

(dans lesquels $A^1$ et $A^k$ sont des groupes phényle ou cycloalkyle en $C_{5-20}$, $A^2$ à $A^{k-1}$ sont, respectivement, des groupes phénylène ou cycloalkylène en $C_{5-20}$, $R^1$ et $R^2$ sont des groupes alkyle en $C_{1-20}$, k est un entier de 2 à 5, et m et n sont des entiers de 0 à 5, à condition que $n + m \geqq 1$).

2. Procédé selon la revendication 1, dans lequel la réaction de polycondensation est effectuée en insufflant un gaz inerte.

3. Procédé selon la revendication 1 dans lequel la réaction de polycondensation est effectuée avec addition d'un milieu de chauffage frais en évacuant le milieu et le sous-produit.

4. Procédé selon la revendication 1, dans lequel la réaction de polycondensation est effectuée en présence de composés de tungstène et/ou de composés de l'étain dans le milieu de chauffage.